# EUROPÄISCHE PATENTSCHRIFT

(11) **EP 1 627 727 B1**
(45) Veröffentlichungstag und Bekanntmachung des Hinweises auf die Patenterteilung: **12.03.2014**
(21) Anmeldenummer: 05016051.4
(22) Anmeldetag: 23.07.2005
(51) Int. Cl.: B30B 15/00, B30B 11/08, H02K 7/14

(54) **Rundläufertablettenpresse**
Rotary press for tablets
Presse rotative pour comprimés

(30) Priorität: 19.08.2004 DE 102004040163
(43) Veröffentlichungstag der Anmeldung: 22.02.2006
(73) Patentinhaber: Fette GmbH, 21493 Schwarzenbek (DE)
(72) Erfinder: Lüneburg, Peter, 23919 Berkentin (DE); Schmidt, Ingo, 21493 Schwarzenbek (DE); Greve, Joachim, 23911 Pogeez (DE); Arndt, Ulrich, 21481 Lauenburg (DE); Oldenburg, Alexander, 21521 Dassendorf (DE)
(74) Vertreter: Hauck Patent- und Rechtsanwälte

(56) Entgegenhaltungen:
- DE-B3- 10 326 175
- DE-U1-202004 004 311
- JP-A- 6 198 528
- US-A- 3 566 806
- US-A1- 2004 067 275
- US-B1- 6 177 746
- PATENT ABSTRACTS OF JAPAN Bd. 2000, Nr. 01, 31. Januar 2000 (2000-01-31) & JP 11 267895 A (TDK CORP), 5. Oktober 1999 (1999-10-05)
- PATENT ABSTRACTS OF JAPAN Bd. 017, Nr. 244 (M-1410), 17. Mai 1993 (1993-05-17) & JP 04 367398 A (JAPAN NUCLEAR FUEL CO LTD<JNF>; others: 01), 18. Dezember 1992 (1992-12-18)
- PATENT ABSTRACTS OF JAPAN Bd. 1995, Nr. 04, 31. Mai 1995 (1995-05-31) & JP 07 009197 A (TDK CORP), 13. Januar 1995 (1995-01-13)

## Beschreibung

Die Erfindung bezieht sich auf eine Rundtäufertablettenpresse nach dem Oberbegriff des Patentanspruchs 1oder 2.

Hauptbestandteil einer Rundläufertablettenpresse ist der Rotor oder das Rotorpaket. Der Rotor besteht aus einer Matrizenscheibe und Führungen für Ober- und Unterstempel. Diese Teile sind bei bekannten Pressen zumeist einteilig hergestellt. Weitere wesentliche Bestandteile sind Kurvensegmente, welche die Position der Ober- und Unterstempel in den Führungen steuern sowie mindestens eine obere und eine untere Druckrolle in der Pressstation, in welcher die Druckrollen Ober- und Unterstempel gegeneinander drücken zum Komprimieren des Preßmaterials in den Matrizen der Matrizenscheibe. Der Rotor ist bei den bekannten Tablettenpressen mit einer zentralen aufrechten Rotorwelle verbunden, die im Maschinengehäuse drehbar gelagert ist. Die Rotorwelle wird von einem elektrischen Antriebsmotor angetrieben, der im Maschinengehäuse angeordnet ist und über einen Riementrieb oder dergleichen mit einem Untersetzungsgetriebe gekoppelt ist, dessen Ausgangswelle mit der Rotorwelle gekoppelt ist. Eine derartige Rundläufertablettenpresse ist in JP-A-04367398 /JAPAN NUCLEAR FUEL CO LTD <JNF>; others: 01), 18. Dezember 1992 offenbart.

Bei herkömmlichen Rundläufertablettenpressen sitzt der Rotor drehfest auf dem oberen Ende der Rotorwelle, wobei die Rotorwelle und der Rotor mit Hilfe von Wälzlagern im Maschinengestell gelagert sind. Die Lagerung der Kurvensegmente und der Druckrollen erfolgt ebenfalls im Maschinengestell.

Aus JP-A-11267895 (TDK CORP), 5. Oktober 1999 ist eine Rundläuferpresse gemäß dem Oberbegriff der Ansprüche 1 und 2 bekannt. Der Motor ist über eine Getriebe und eine Kupplung im Abstand zum Rotor der Rundläuferpresse angeordnet. Aus JP-A-07009197 (TDK CORP), 13. Januar 1995 ist ebenfalls bekannt, einen Antriebsmotor für eine Rundläuferpresse über ein Getriebe und eine Welle sowie eine Kupplung mit dem Rotor zu koppeln. Auch aus US-A-2004/067275 ist bekannt geworden, einen Elektromotor im unteren Bereich des Maschinengehäuses einer Rundläuferpresse anzuordnen und über einen Riementrieb und ein exzentrisch angeordnetes Getriebe in Rotation zu versetzen.

Aus US 2004/0067275 ist bekannt geworden, die Welle eines koaxial zum Rotor einer Rundläuferpresse angeordneten Motors über eine Axialkupplung mit dem Rotor der Rundläuferpresse zu koppeln.

Aus JP-A-06198528 (MITSUBISHI AVI IND LTD), 19. Juli 1994 ist bekannt geworden, mittels gegenläufig horizontal angeordneter Windungen einen Drehteller horizontal schwimmend zu lagern. Ein weiterer Antrieb sorgt für die Rotation des Drehtellers.

Der beschriebene Antrieb für die Rundläufertablettenpresse weist eine Vielzahl von Einzelteilen auf, wie Rotorwelle, Getriebe, Motor, Riementrieb usw., die zum Teil verschleißanfällig, wartungsintensiv und montageaufwendig sind. Außerdem benötigen sie relativ viel Platz.

Der Erfindung liegt die Aufgabe zugrunde, eine Rundläufertablettenpresse dahingehend zu verbessern, dass sie eine kompaktere Bauform erhält mit weniger Einzel- bzw. Verschleißteilen.

Diese Aufgabe wird durch die Merkmale der Patentansprüche 1 und 2 gelöst.

Bei der erfindungsgemäßen Rundläufertablettenpresse nach Patentanspruch 1 ist der Läufer eines Torquemotors unmittelbar unterhalb des Rotors in geringem Abstand zu diesem auf der Rotorwelle angeordnet, und der Läufer ist drehfest auf der Rotorwelle angeordnet oder koaxial drehfest mit der Rotorwelle gekoppelt. Vor- und nachstehend wird der Begriff Rotor nur für den oben definierten Teil der Rundläufertablettenpresse verwendet, während für den Elektromotor die Begriffe Läufer und Ständer verwendet werden.

Die Lagerung von Rotor und Rotorwelle kann herkömmlich im Maschinengestell ausgeführt sein.

Der Läufer ist unmittelbar unterhalb des Rotors in geringem Abstand zu diesem auf der Rotorwelle angeordnet.

Bei der Lösung der erfindungsgemäßen Aufgabe nach Patenanspruch 2 ist der Läufer des Elektromotors in den Rotor der Tablettenpresse integriert und umgibt den stationär im Maschinengehäuse angeordneten Ständer. Wird bei den weiter oben beschriebenen Ausführungsformen bereits eine sehr kompakte Bauweise erzielt, ist mit der zuletzt erwähnten Ausgestaltung ein noch besseres Ergebnis erzielt.

Zur Lagerung von Rotor und elektrischem Antrieb sieht eine weitere Ausgestaltung der Erfindung vor, dass der Ständer auf einer stationären vertikalen Tragsäule sitzt, auf der der Rotor drehbar gelagert ist, z.B. über ein oberes und ein unteres Wälzlager, wobei der Ständer zwischen den Wälzlagern angeordnet ist.

Mit der Erfindung wird eine sehr kompakte Bauform mit wenigen Einzel- und Verschleißteilen erzielt. Bei der erfindungsgemäßen Konstruktion wird ein Platzgewinn im Antriebsraum erhalten, insbesondere bei Wegfall der Rotorwelle. Die Erfindung ermöglicht außerdem eine geringere Wartung und verringert den Verschleiß gegenüber den herkömmlichen Antrieben mit Getriebe und Riemenantrieb. Außerdem wird eine bessere Laufruhe erhalten und eine Reduzierung des Maschinengewichts Da eine wesentlich kleinere Anzahl von Bauteilen erforderlich ist, ergibt sich eine entscheidende Zeit- und Kosteneinsparung bei der Herstellung und Montage der Rundläufertablettenpresse.

Als Elektromotor wird ein sogenannter Torquemotor verwendet. Sie sind in Verbindung mit Werkzeugmaschinen an sich bekannt. Sie zeichnen sich durch eine geringe Massenträgheit, große Genauigkeit, Wartungsfreiheit, hohe Belastbarkeit, geringe Drehmomentwelligkeit und hohem Wirkungsgrad aus.

Ausführungsbeispiele der Erfindung werden nachfolgend anhand von Zeichnungen näher erläutert.
- Fig. 1: zeigt schematisch teilweise im Schnitt eine Rundläufertablettenpresse mit einem Antrieb nach der Erfindung.
- Fig. 2: zeigt eine Rundläufertablettenpresse in einer zweiten Ausführungsform für einen Antrieb nach der Erfindung.

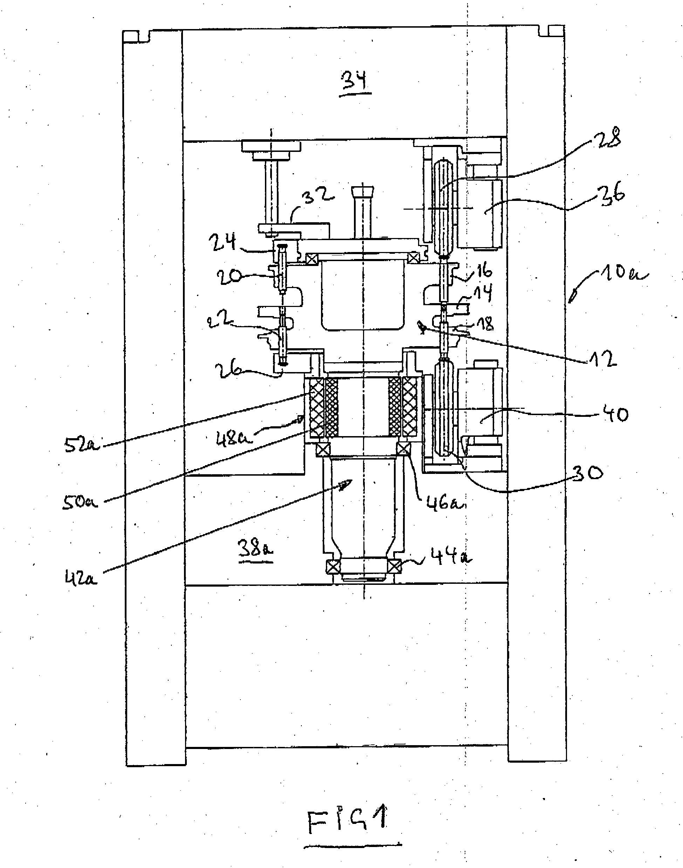

In Fig. 1 ist ein Maschinengestell mit 10a bezeichnet. Es dient zur Aufnahme einer Rundläufertablettenpresse. Diese weist einen Rotor 12 auf, der, wie üblich, aus einer Matrizenscheibe 14, oberer Stempelführung 16 und unterer Stempelführung 18 besteht. Die genannten Teile bilden eine Einheit. Von den Führungen 16, 18 werden Oberstempel 20 bzw. Unterstempel 22 aufgenommen und axial geführt. Sie wirken mit nicht bezeichneten Matrizen der Matrizenscheibe 14 zusammen. Die Steuerung der Ober- und Unterstempel 20, 22 erfolgt über Kurvensegmente 24 bzw. 26. Außerdem ist eine obere Druckrolle 28 und eine untere Druckrolle 30 zu erkennen zum Verpressen des Pulvermaterials in der Matrize durch Gegeneinanderpressen von Ober- und Unterstempel 20, 22. Wie erkennbar, sind die oberen Kurvensegmente 24 über eine entsprechende Halterung 32 an einer oberen Traverse 34 des Maschinengestells 10 gehalten. An der Traverse 34 ist auch ein Lagerbauteil 36 für die obere Druckrolle 28 angebracht. Die unteren Kurvensegmente 26 sind in einer unteren Traverse 38a des Maschinengestells 10 angebracht, an der auch ein Lagerbauteil 40 für die untere Druckrolle 30 angebracht ist. Von der unteren Traverse 38a wird auch eine Rotorwelle 42a gelagert, und zwar über ein unteres Wälzlager 44a und ein oberes Wälzlager 46a. Die Rotorwelle 42a ist in geeigneter, nicht gezeigter Weise mit dem Rotor 12 gekoppelt.

Ein elektrischer Antriebsmotor 48 a, ein Torquemotor, befindet sich knapp unterhalb des Rotors 12, und sein Läufer 50a sitzt auf einem im Durchmesser verjüngten Abschnitt der Rotorwelle 42a. Man erkennt, dass die erzielbare Einsparung an Bauraum beträchtlich ist. Der Läufer 50a ist drehfest auf der Rotorwelle 42a angeordnet. Das Drehmoment am Ständer 52a wird an der Traverse 38a abgefangen.

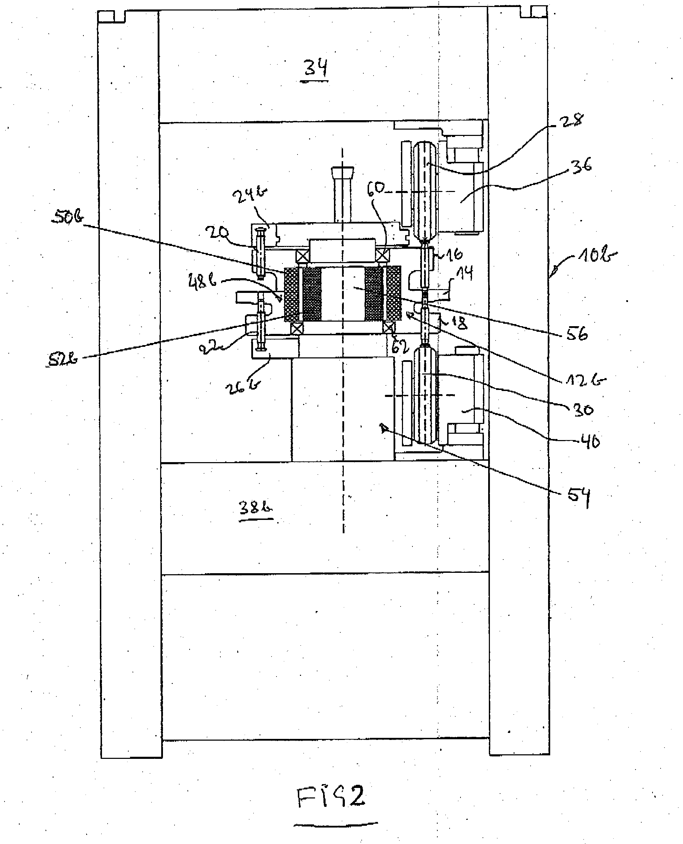

Soweit bei der Ausführungsform nach Fig. 2 gleiche Teile wie bei der Ausführungsform nach Fig. 1 verwendet werden, werden gleiche Bezugszeichen eingesetzt. Die Ausführungsform nach Fig. 2 unterscheidet sich von der nach Fig. 1 dadurch, daß die Rotorwelle 42a deutlich kürzer ausgeführt ist und unterhalb der Rotorwelle 42a ein freier Raum im Maschinengestell 10a verbleibt.

Bei der Ausführungsform nach Fig. 2 werden wiederum gleiche Teile mit gleichen Bezugszeichen versehen, wie bei der Ausführungsform nach Fig. 1, wobei teilweise ein Index "b" hinzugefügt ist.

Die Ausführungsform nach Fig. 2 unterscheidet sich von denen nach Fig. 1 dadurch, dass auf der Traverse 38b des Maschinengestells 10b eine vertikale Tragsäule 54 stationär angeordnet ist. Sie weist einen im Durchmesser verjüngten Abschnitt am oberen Ende auf, der mit 56 bezeichnet ist und auf dem ein Ständer 52b eines elektrischen Antriebsmotors 48b stationär angeordnet ist, während sein Läufer 50b in den Rotor 12b integriert ist. Zum Einbau des Läufers 50b kann der Rotor 12b in der horizontalen Ebene geteilt oder alternativ in Umfangsrichtung aus zwei und mehr Segmenten zusammengesetzt sein, die passend und fest miteinander, jedoch lösbar verbindbar sind. Der Rotor 12b ist auf der Tragsäule 54 über ein oberes Wälzlager 60 und ein unteres Wälzlager 62 drehbar gelagert. Wie erkennbar, sind auch die oberen Kurvensegmente 24b an dem oberen Ende der Tragsäule 54 angebracht. Die untere Druckrolle 30 ist zum einen im Lagerbauteil 40, das auf der Traverse 38b angebracht ist, und zum anderen an der Tragsäule 54 drehbar gelagert.

Man erkennt bei der Ausführungsform nach Fig. 2 die große Platzeinsparung, welche bei dieser Konstruktion erzielt wird.

## Patentansprüche

1. Rundläuferpresse mit einem Rotor (12), der eine Matrizenscheibe (14) und Führungen (16, 18) für Ober- und Unterstempel (20, 22) aufweist, einer Rotorwelle (42a) und einem elektrischen, die Rotorwelle (42a) antreibenden Antriebsmotor, der einen Läufer (50a) und einen Ständer (52a) aufweist, **dadurch gekennzeichnet, dass** der Läufer (50a) eines Torquemotors (48a) unmittelbar unterhalb des Rotors (12) in geringem Abstand zu diesem auf der Rotorwelle (42a) angeordnet ist und dass der Läufer unmittelbar drehfest auf der Rotorwelle (42a) angeordnet oder koaxial mit der Rotorwelle gekoppelt ist.

2. Rundläufertablettenpresse mit einem Rotor (12b), der eine Matrizenscheibe (14) und Führungen (16, 18) für Ober- und Unterstempel (20 22) aufweist, einer Rotorwelle (56) und einem die Rotorwelle (56) antreibenden elektrischen Antriebsmotor (48b), der einen Läufer(50b) und einen Ständer (52b) aufweist, **dadurch gekennzeichnet, dass** der Läufer (50b) in den Rotor (12b) integriert ist und den Ständer (52b) umgibt.

3. Rundläufertablettenpresse nach Anspruch 2, **dadurch gekennzeichnet, dass** der Ständer (52b) auf einer stationären vertikalen Tragsäule (54) sitzt, auf der der Rotor (12b) drehbar gelagert ist.

4. Rundläufertablettenpresse nach Anspruch 3, **dadurch gekennzeichnet, dass** der Rotor (12b) über ein oberes und ein unteres Wälzlager (60, 62) an der Tragsäule (54) gelagert und der Ständer (52b) zwischen den Wälzlagern ((60, 62) angeordnet ist.

5. Rundläufertablettenpresse nach Anspruch 3 oder 4, **dadurch gekennzeichnet, dass** Kurvensegmente (24b, 26b) an der Tragsäule (54) angebracht sind.

## Claims

1. A rotary press with a rotor (12), which has a die plate (14) and guides (16, 18) for upper and lower punches (20, 22), a rotor shaft (42a) and an electric drive motor driving the rotor shaft (42a), which has an armature (50a) and a stator (52a), **characterized in that** the armature (50a) of a torque motor (48a) is arranged directly below the rotor (12) at a short distance from it on the rotor shaft (42a) and that the armature is arranged directly on the rotor shaft (42a) in a torque-proof manner or is coupled coaxially with the rotor shaft.

2. A rotary press for tablets with a rotor (12b), which has a die plate (14) and guides (16, 18) for upper and lower punches (20, 22), a rotor shaft (56) and an electric drive motor (48b) driving the rotor shaft (56), which has an armature (50b) and a stator (52b), **characterized in that** the armature (50b) is integrated into the rotor (12b) and surrounds the stator (52b).

3. The rotary press for tablets according to claim 2, **characterized in that** the stator (52b) sits on a stationary, vertical supporting column (54), on which the rotor (12b) is pivot-mounted.

4. The rotary press for tablets according to claim 3, **characterized in that** the rotor (12b) is mounted above an upper and a lower roller bearing (60, 62) on the supporting column (54) and the stator (52b) is arranged between the roller bearings (60, 62).

5. The rotary press for tablets according to claim 3 or 4, **characterized in that** cam segments (24b, 26b) are attached to the supporting column (54).

## Revendications

1. Presse rotative avec un rotor (12) comportant un disque de matrice (14) et des guidages (16, 18) pour un poinçon supérieur et un poinçon inférieur (20, 22), un arbre de rotor (42a) et un moteur d'entraînement électrique entraînant l'arbre de rotor (42a) et comportant un induit (50a) et un stator (52a), **caractérisée en ce que** l'induit (50a) d'un moteur-couple (48a) est monté sur l'arbre de rotor (42a), directement sous le rotor (12), à une faible distance de celui-ci, et **en ce que** l'induit est monté fixe en rotation directement sur l'arbre de rotor (42a) ou coaxialement avec l'arbre de rotor.

2. Presse rotative pour comprimés, avec un rotor (12b) comportant un disque de matrice (14) et des guidages (16, 18) pour un poinçon supérieur et un poinçon inférieur (20, 22), un arbre de rotor (56) et un moteur d'entraînement électrique (48b) entraînant l'arbre de rotor (56) et comportant un induit (50b) et un stator (52b), **caractérisée en ce que** l'induit (50b) est intégré dans le rotor (12b) et entoure le stator (52b).

3. Presse rotative pour comprimés selon la revendication 2, **caractérisée en ce que** le stator (52b) repose sur une colonne de support verticale stationnaire (54) sur laquelle le rotor (12b) est monté de façon rotative.

4. Presse rotative pour comprimés selon la revendication 3, **caractérisée en ce que** le rotor (12b) est monté sur la colonne de support (54) par le biais d'un palier à roulement supérieur et d'un palier à roulement inférieur (60, 62), et le stator (52b) est agencé entre les paliers de roulement (60, 62).

5. Presse rotative pour comprimés selon la revendication 3 ou 4, **caractérisée en ce que** les segments de courbe (24b, 26b) sont fixés à la colonne de support (54).
